(19) Europäisches Patentamt / European Patent Office / Office européen des brevets

(11) **EP 2 913 823 A1**

(12) **EUROPEAN PATENT APPLICATION**

(43) Date of publication:
02.09.2015 Bulletin 2015/36

(51) Int Cl.:
*G11B 27/10* (2006.01)

(21) Application number: 15156208.9

(22) Date of filing: 24.02.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.02.2014 JP 2014035205

(71) Applicant: Funai Electric Co., Ltd.
Daito-shi,
Osaka 574-0013 (JP)

(72) Inventor: Yoshimoto, Tadafumi
Daito-shi, Osaka 574-0013 (JP)

(74) Representative: Grünecker Patent- und
Rechtsanwälte
PartG mbB
Leopoldstraße 4
80802 München (DE)

(54) **Reproducing device, external device, and reproducing method of content**

(57) A reproducing device acquires a content information including a content ID and a number of reproduction times of a content from an external device. The reproducing device determines a reproduction order of the content based on the number of reproduction times. Then, the reproducing device acquires the content corresponding to the reproduction order from the external device via communication network to reproduce the content in the reproducing device. Thus, operations of a user are reduced when the content recorded in the external device is reproduced in the reproducing device.

Fig. 1

EP 2 913 823 A1

**Description**

CROSS-REFERENCES TO RELATED APPLICATIONS

This patent specification is based on Japanese patent application, No. 2014-035205 filed on February 26, 2014 in the Japan Patent Office, the entire contents of which are incorporated by reference herein.

BACKGROUND OF THE INVENTION

1. Field of the Invention:

The present invention relates to a reproducing device that reproduces a content recorded in an external device by communicating with the external device and relates to a reproducing method of the content.

2. Description of the Related Art:

For example, in an invention shown in Patent Document 1, a content recorded in a device is reproduced in another device by establishing communication between the two devises to transmit the content by streaming. In such a situation, a device (reproducing device) to which the content is transmitted can reproduce the content recorded in another device without recording the content.

[Patent Document 1] Japanese Patent Application Laid-Open No. 2008-268308

When a content recorded in two or more external devices is transmitted by streaming and reproduced in the reproducing device, the external devices are not associated with each other, and therefore a user should switch the external devices and select the content by themselves. For example, when the reproducing device is connected with the external devices by using a protocol of short-range wireless communication such as Bluetooth, a pairing is required between the reproducing device and each of the external devices in one-to-one relation. Therefore, a complicated operation is required for the user.

The present invention can reduce the operations of the user when the content recorded in a plurality of external devises is transmitted by streaming and reproduced in the reproducing device.

BRIEF SUMMARY OF THE INVENTION

Application example 1

In one embodiment of the present invention, a reproducing device comprises: a communication portion that can be connected with an external device; an acquisition portion that acquires a content information from the external device, the content information including a content ID and a number of reproduction times of a content; and a reproduction order determining portion that determines a reproduction order of the content based on the number of reproduction times.

In the embodiment configured above, when the reproducing device is connected with the external device via the communication portion, the acquisition portion acquires the content information from the external device. The content information includes the content ID and the number of reproduction times of the content. Then, the reproduction order determining portion determines the reproduction order of the content based on the number of reproduction times of the content reproduced in each of the external devices. A specific method to determine the reproduction order of the content varies widely.

Therefore, the reproduction order of the content recorded in each of the external devices can be determined in accordance with preference of each user and the reproducing device can reproduce the content according to the determined reproduction order.

Application example 2

In another embodiment of the present invention, the content information further includes an attribute information of the content, and the reproduction order determining portion determines the reproduction order of the content based on the number of reproduction times corresponding to the attribute information.

In the embodiment configured above, the content information further includes the attribute information of the content. Therefore, the number of reproduction times can be counted by focusing on a particular attribute information to determine the reproduction order of the content. In other words, the preference of the user can be efficiently reflected to the reproduction order based on the attribute information.

Application example 3

In another embodiment of the present invention, the acquisition portion acquires the content information from a plurality of external devices that can be connected with the communication portion.

In the embodiment configured above, the communication portion can be connected with a plurality of external devices, and the acquisition portion acquires the content information from the plurality of external devices. Then, the reproduction order determining portion can determine the reproduction order of the content based on the number of reproduction times of the content stored in the plurality of external devises. For example, the reproduction order of the content can be determined for all contents stored in the plurality of external devices of different owners to sequentially reproduce the contents among the contents stored in the plurality of external devices

Application example 4

In another embodiment of the present invention, the acquisition portion acquires the number of reproduction times corresponding to the attribute information in each of the plurality of external devices, the reproduction order determining portion calculates a ratio of the number of reproduction times with respect to a total number of reproduction times in each of the plurality of external devices, calculates an average value of the ratio of the plurality of external devices, and determines the reproduction order of the content based on the average value.

In the embodiment configured above, the ratio of the number of reproduction times corresponding to the attribute information with respect to the total number of reproduction times is focused as an example of an element to determine the reproduction order. In other words, the number of reproduction times of the content specified by a particular attribute information with respect to the total number of reproduction times in the external device is focused. Furthermore, in order to reflect characteristic of each of the plurality of external devices, the reproduction order determining portion determines the reproduction order of the content based on the average value of the ratios. The reproduction order can be determined based on the ratios of the number of reproduction times corresponding to a particular attribute information with respect to the total number of reproduction times. For example, the reproduction order is started from the content having a higher ratio of the number of reproduction times or started from the content having a lower ratio of the number of reproduction times. In this case, a strict average value is not necessary to be used. Instead, any values having similar characteristic as the average value can be used (e.g. intermediate value).

Application example 5

In another embodiment of the present invention, the acquisition portion acquires the number of reproduction times corresponding to the attribute information in each of the plurality of external devices, the reproduction order determining portion calculates a first ratio of the number of reproduction times with respect to a total number of reproduction times in each of the plurality of external devices, calculates an average value of the first ratio of the plurality of external devices, calculates a second ratio of the number of reproduction times of the content with respect to the total number of reproduction times in one of the plurality of external devices, and determines the reproduction order of the content based on the second ratio and the average value.

In the embodiment configured above, the ratio of the number of reproduction times of the content specified by the attribute information with respect to the total number of reproduction times is calculated in each of the plurality of external devices. Then, the average value of the ratios in the plurality of external devices is calculated. Even when the total number of reproduction times significantly varies among the external devices, the ratio of the number of reproduction times is calculated in each of the external devices. Therefore, tendency of reproducing content in each of the plurality of external devices is clearly shown in the ratio. Since the average value of the ratios of the plurality of external devices is calculated after that, it is expected that the tendency of reproducing content in a particular external device is emphasized. Then, the ratio of the number of reproduction times of the content in one of the plurality of external devices is taken into consideration, and finally the reproduction order is obtained.

The total number of reproduction times varies depending on each of external devices. Namely, the total number of reproduction times varies depending on use frequency of the owner of the external device. Therefore, if the reproduction order is determined simply based on the number of reproduction times of the content acquired from the external devices, it may happen that only the content that belongs to the external device having a large total number of reproduction times is reproduced. To avoid the above situation, the ratio of the total number of reproduction times is calculated instead of the number of reproduction times in each of the external devices, and then the average value of the ratios of the external devices is calculated. In addition, the ratio of the number of reproduction times of the content in a certain external device is taken into consideration. Therefore, the priority of the reproduction order of the content can be higher for the content having high ratio of the number of reproduction times in a particular external device even if the ratio of the number of reproduction times of the content is not so high in other external devices.

In other words, since the average value is calculated after the ratio is calculated in each of the external devices, tendency in a certain external device can be equally considered even if the total number of reproduction times varies depending on the external devices.

Application example 6

In another embodiment of the present invention, the attribute information includes at least either of an artist or a genre, and the reproduction order determining portion determines the reproduction order of the content based on the number of reproduction times of the artist and the number of reproduction times of the genre.

In the embodiment configured above, since the artist and the genre, which significantly show tendency of preference, are included in the attribute information, the reproduction order can be determined based on the number of reproduction times of each artist, each genre, or a combination of the artist and the genre. In addition, since the number of reproduction times of each artist and each genre can be combined, preference of the user can be efficiently reflected on the reproduction order.

Application example 7

In another embodiment of the present invention, the reproduction order determining portion changes the reproduction order of the content so that the content having a high ratio of the number of reproduction times in the external device is listed in a prior order.

In the embodiment configured above, even if the number of reproduction times of the content is low on average among the external devices, the content can be listed in a prior order when the number of reproduction times of the content is high in a particular external device. Therefore, the reproduction order can be determined more flexibly.

Application example 8

In another embodiment of the present invention, when overlapped contents are existed, the reproduction order determining portion adds only one of the overlapped contents into the reproduction order.

In the embodiment configured above, the overlapped contents are prevented from being reproduced redundantly.

Application example 9

In another embodiment of the present invention, when the overlapped contents are existed, the reproduction order determining portion adds the content into the reproduction order based on a bit rate of the content.

A difference of the bit rate appears as a difference of quality of sound when reproducing the content. For example, if the content having high bit rate is selected, the content can be reproduced with high quality sound but transmission capacity is increased. In the embodiment configured above, when the overlapped contents are existed, the content having high bit rate can be selected to improve the sound quality. On the other hand, the content having low bit rate can be selected to reduce the transmission capacity. Thus, one of the contents can be selectably added into the reproduction order.

Application example 10

In another embodiment of the present invention, the reproducing device further comprises a memory portion that stores the content and the content information in which the content ID and the number of reproduction times of the content are associated with each other; wherein the reproduction order determining portion adds the content into the reproduction order based on the content information stored in the memory portion.

In the embodiment configured above, the memory portion of the reproducing device stores the content and the content information in which the content ID and the number of reproduction times of the content are associated with each other. The reproduction order determining portion adds the content into the reproduction order based on the content information, which is stored in the memory portion stimulatory when the reproduction order of the content is determined.

Application example 11

In another embodiment of the present invention, the reproducing device further comprises a control portion that acquires the content corresponding to the reproduction order via the communication portion.

In the embodiment configured above, the control portion of the reproducing device acquires the content corresponding to the reproduction order from the external device via the communication portion. Since the content stored in the external device is acquired, the content can be reproduced in the reproducing device.

As explained above, when reproducing the content, the content can be transmitted by streaming from the external device that stores the content to the reproducing device, for example. In other words, when the user transmits the content from the external device to the reproducing device by streaming to reproduce the content, the user is not required a complicated operation of the external device.

Application example 12

In another embodiment of the present invention, the content information acquired by the acquisition portion further includes a terminal ID that is assigned for the external device, and the control portion acquires the content corresponding to the reproduction order from the external device having the terminal ID that is assigned for the external device containing the content.

In the embodiment configured above, the content information acquired by the acquisition portion includes the terminal ID that is assigned for the external device. Therefore, after the reproduction order determining portion determines the reproduction order of the content, the control portion acquires the terminal ID corresponding to each content based on the content information corresponding to the reproduction order. Consequently, the content can be acquired from the external device having the terminal ID corresponding to the content.

Application example 13

In another embodiment of the present invention, the communication portion can be connected with an external network, and the control portion acquires the content corresponding to the reproduction order from the external network.

In the embodiment configured above, the communication portion is connected to the external network. If the external device is connected to the external network, the control portion acquires the content corresponding to the reproduction order from the external device via the external network. Thus, the reproducing device can be simultaneously connected with a plurality of external devices. Therefore, the reproducing device can be easily connected with the external devices.

The present invention can be used not only as the reproducing device but also as a reproducing system that includes the reproducing device.

The reproducing system is composed of the reproducing device and the external device.

Application example 14

In another embodiment of the present invention, an external device to record and reproduce a content comprises: a communication portion that can be connected with an external reproducing device; a memory portion that stores a content information in which a content ID and a number of reproduction times of the content are associated with each other, wherein the external device transmits the content information to the external reproducing device via the communication portion.

The embodiment configured above supports the reproducing device of the application example 11. The external device of the present embodiment transmits the content information to the reproducing device via the communication portion.

Application example 15

In another embodiment of the present invention, in the external device, the content information further includes an attribute information of the content, and the attribute information is associated with the content ID and stored in the memory portion.

The embodiment configured above supports the reproducing device of the application example 2.

Application example 16

In another embodiment of the present invention, in the external device, the attribute information includes at least either of an artist and a genre.

The embodiment configured above supports the reproducing device of the application example 6.

Application example 17

In another embodiment of the present invention, in the external device, the content information further includes a terminal ID that is assigned for the external device, and the terminal ID is associated with the content ID and stored in the memory portion.
The embodiment configured above supports the reproducing device of the application example 12.

Application example 18

In another embodiment of the present invention, the external device transmits the content requested via the communication portion to the external reproducing device.
The embodiment configured above supports the reproducing device of the application example 11.
The present invention can be also applied to a reproducing method having the same feature.

Application example 19

In another embodiment of the present invention, a reproducing method of a content in a reproducing device capable of being communicated with an external device that records and reproduces the content, the method comprises the steps of: acquiring a content information from the external device, the content information including a content ID and a number of reproduction times of the content; determining a reproduction order of the content based on the number of reproduction times; and acquiring the content corresponding to the reproduction order from the external device to reproduce the content.

Application example 20

In another embodiment of the present invention, the external devise stores the content information in which the content ID and the number of reproduction times of the content are associated with each other, the external device transmits the content information to the reproducing device through communication, and the external device transmits the content requested through the communication to the reproducing device from a plurality of stored contents.
Note that the present invention can be applied to an application program that enables the external device used together with the reproducing device of the present invention to execute predetermined processes.

BRIEF DESCRIPTION OF THE DRAWINGS

Fig. 1 is an external view of a reproducing system as an example.
Fig. 2 is a block diagram showing a hardware configuration of a reproducing device.
Fig. 3 is a functional block diagram explaining a function of the reproducing device.
Figs. 4A, 4B and 4C are diagrams showing a content information Cd transmitted from external devices to a display device 10 as an example.
Figs. 5A and 5B are diagrams explaining a relation between a number of reproduction times of a content and a priority.
Fig. 6 is a block diagram showing a configuration of an external device 30.
Fig. 7 is a flow chart explaining a method to record the content information Cd in the external device 30.
Fig. 8 is a flow chart showing a reproducing method of the content.
Fig. 9 is a diagram showing a play list P1 as an example.
Fig. 10 is a flow chart explaining a calculating method of a priority executed in the step SA4.
Figs. 11A, 11B, 11C and 11D are diagrams explaining a calculating method of a priority $\beta$ of each content from the content information Cd.
Figs. 12A, 12B and 12C are diagrams explaining a calculating method of a priority $\beta$ of each content from the content information Cd.
Fig. 13 is a flow chart explaining a calculating method of a priority executed in the step SA4 of the second embodiment.
Figs. 14A, 14B and 14C are diagrams explaining a priority $\delta$ in the second embodiment.
Fig. 15 is a flow chart showing a process executed in the step S5 of Fig. 8 in the third embodiment.

DETAILED DESCRIPTION OF THE INVENTION

Hereafter, embodiments of the present invention will be explained according to the following order.

1. First embodiment:

(1) Configuration of reproducing system
(2) Recording method of content information
(3) Reproducing method of contents
(4) Calculating method of priority

2. Second embodiment:
3. Third embodiment:
4. Other embodiments:

1. First embodiment:

(1) Configuration of reproducing system

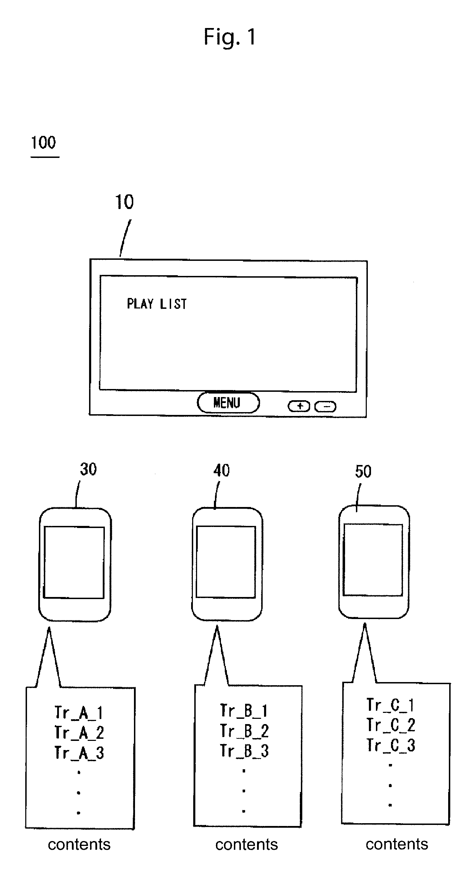

Fig. 1 is an external view of a reproducing system as an example.

In the first embodiment, a display device 10 mounted on a vehicle is used for explanation as an example of a reproducing device that forms a part of a reproducing system 100. The display device 10 is mounted inside a not illustrated vehicle. The display device 10 can provide services such as a car navigation and a reproduction of contents for a user in the vehicle. In addition, the display device 10 can establish a communication with external devices 30, 40 or 50 and receive contents by streaming from the external devices 30 to 50. In other words, in the present embodiment, the external devices 30 to 50 are used as a source device to transmit the contents to other devices by streaming.

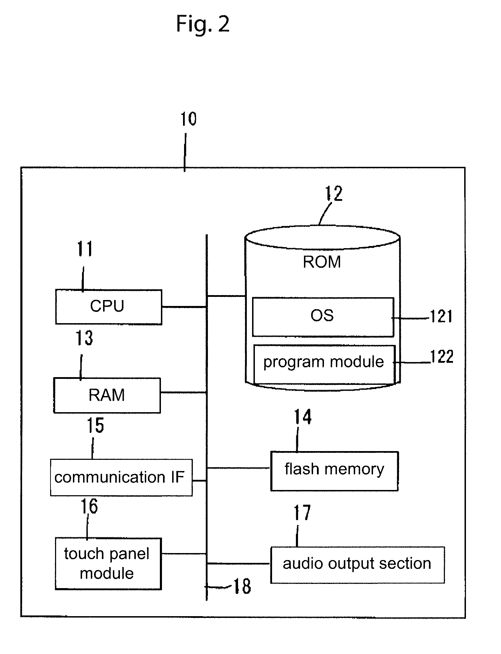

Fig. 2 is a block diagram showing a hardware configuration of a reproducing device.

The display device 10 includes a CPU (Central Processing Unit) 11, a ROM (Read Only Memory) 12, a RAM (Random Access Memory) 13, a flash memory 14, a communication IF 15, a touch panel module 16, an audio output portion 17, and a bus 18. Respective parts of the display device 10 are connected with each other via the bus 18.

The communication IF 15 enables the display device 10 to connect with the external devices 30 to 50. The communication IF 15 connects the display device 10 with the external devices 30 to 50 by using a protocol corresponding to Wi-Fi, for example. Therefore, contents and information (content information) of the contents are transmitted from the external devices 30 to 50 to the display device 10 via the established communication network.

In addition, since the communication IF 15 is connected with the external devices 30 to 50 by using LAN such as Wi-Fi, the communication IF 15 can be connected with a plurality of external devices via only one communication network.

The touch panel module 16 receives operation input from the user. The received operation is input to the CPU 11 via the bus 18. Of course, the touch panel module 16 included in the display device 10 is merely an example. Any other way to receive the operation from the user can be used instead.

The CPU 11 totally controls driving of the display device 10 based on the contents input via the communication IF 15, the content information, and the operation input from the touch panel module 16.

In the ROM 12, an OS (Operating System) 121 and a program module 122 are recorded. The OS 121 enables the CPU 11 to control hardware connected via the bus 18. The program module 122 enables the CPU 11 to control the reproduction of the contents based on the contents and the content information acquired from the external devices 30 to 50. Therefore, the CPU 11 expands the OS 121 and the program module 122 in the RAM 13 and executes them to control the hardware. Note that the OS 121 used by the CPU 11 to control the hardware is merely an example. Any other programs other than the OS 121 can be used to control the hardware.

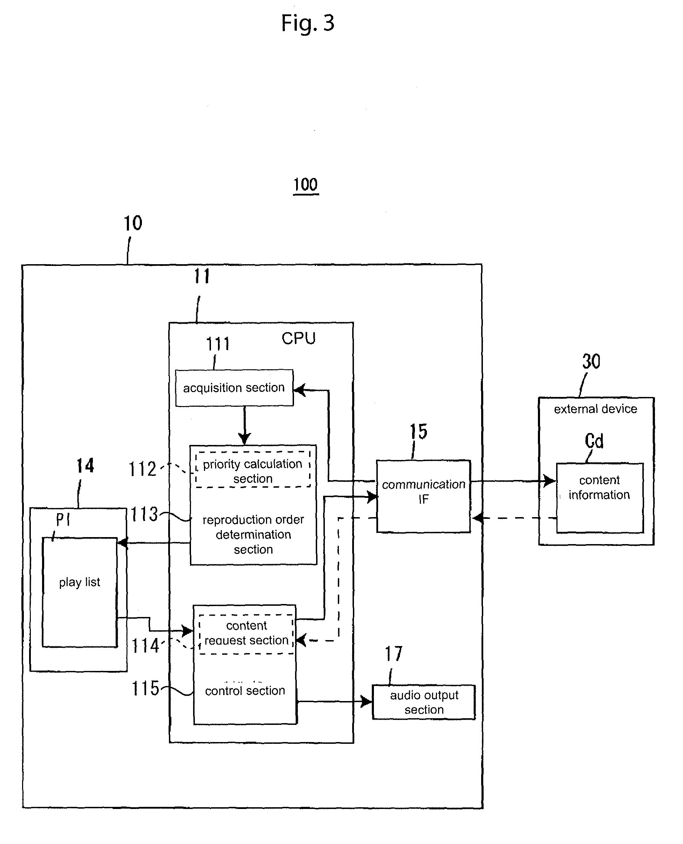

Fig. 3 is a functional block diagram explaining a function of the reproducing device. In Fig. 3, a relation between the hardware and the function that the CPU 11 realizes by executing the OS 121 and the program module 122 recorded in the ROM 12.

An acquisition portion 111 that acquires the content information is also referred to as a content information acquisition portion. The acquisition portion 111 acquires the content information Cd of the contents recorded in the external devices 30 to 50 connected via the communication IF 15. The communication IF 15 corresponds to the communication portion. The content information Cd includes a list of the contents and a number of reproduction times of the contents. In the content information Cd, values are recorded each time when the external devices 30 to 50 reproduce the contents.

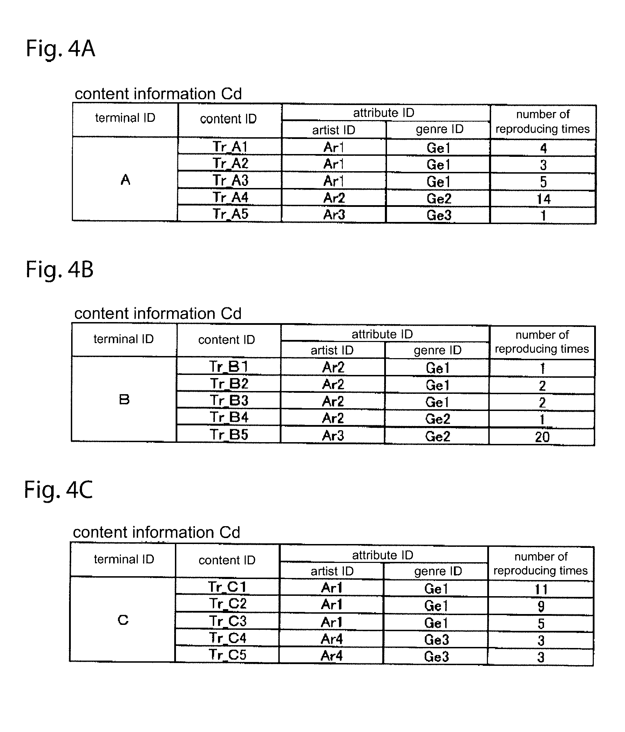

Figs. 4A, 4B and 4C are diagrams showing the content information Cd transmitted from the external devices to the display device 10 as an example. Fig. 4A shows a content information transmitted from the external device 30 to the display device 10. Fig. 4B shows a content information transmitted from the external device 40 to the display device 10. Fig. 4C shows a content information transmitted from the external device 50 to the display device 10.

In the content information Cd shown in Figs. 4A to 4C, a terminal ID that identifies the external device of transmitting the contents, a content ID that identifies the contents, an attribute information that indicates an attribute of the contents, and a number of reproduction times of the contents are associated with each other and recorded. Here, the terminal ID (A to C) is information to identify the external devices 30 to 50 from which the content information Cd is produced. The content ID (Tr_A1 to A5, Tr_B1 to B5, Tr_C1 to C5) is information to identify the contents uniquely. The attribute information is information to classify a feature of the contents. The attribute information can be "content name," "artist," "genre," and "bit rate," for example. The attribute information can be any information that can classify the contents. In the content information Cd shown in Figs. 4A to 4C, an artist ID (Ar) and a genre ID (Ge) are recorded as the attribute information. The artist ID is information indicating a composer or a performer of the contents, for example. If the artist is common between two contents, the same artist ID is given to the two contents. The genre ID is information indicating the genre, such as pop, rock, classic, of the contents. If the genre is common between two contents, the same genre ID is given to the two contents. Hereafter, the contents that belong to the same attribute information are also referred to as an object. The number of reproduction times is a value that is counted each time when the external devices 30 to 50 reproduce a particular content.

As explained above, the display device 10 can be connected with the external devices 30 to 50 via the communication IF 15, which corresponds to the communication portion. The acquisition portion 111 acquires the content information from the external devices 30 to 50. The content information includes the content ID and the number of reproduction times of the contents. The acquisition portion 111 acquires the content information from a plurality of external devices 30 to 50 that can be connected with the communication IF 15, which corresponds to the communication portion. The content information further includes the attribute information of the contents. The attribute information at least includes either of an artist and a genre.

A priority calculation portion 112 realizes a part of a function of a reproduction order determining portion 113. A priority of the content is calculated based on the number of reproduction times acquired by the content information acquisition portion 111. The priority is a value used for determining the reproduction order of the content reproduced in the display device 10. In other words, the content having a high priority is listed earlier in the reproduction order. In the first embodiment, the priority calculation portion 112 focuses on the attribute information that is associated with the content, and a number N of reproduction times is counted for each of the attribute information to determine the priority. Therefore, when a particular attribute information is focused, the priority of the content becomes high if the number N of reproduction times of the object included in the content is large. On the other hand, the priority becomes low if the number N of reproduction times of the object included in the content is small.

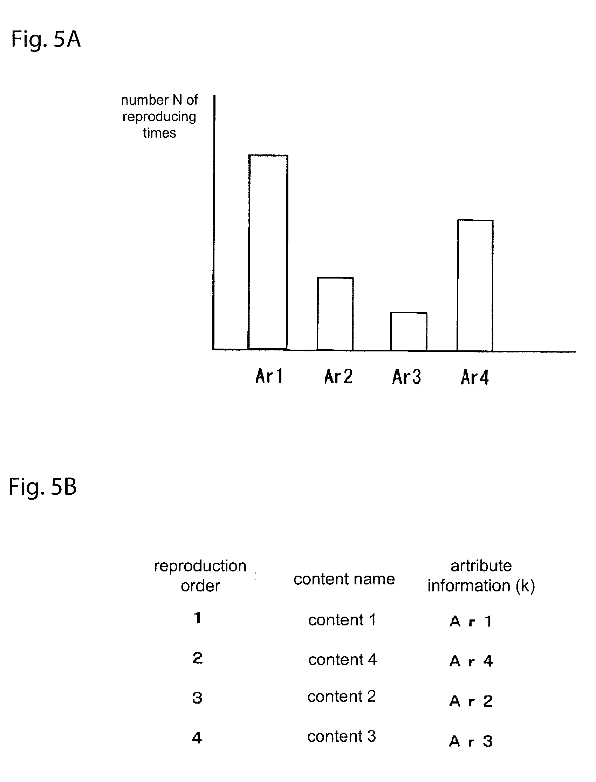

Fig. 5A is a diagram explaining a relation between the number of reproduction times of the content and the priority. In Fig. 5A, when the "artist" is focused as the attribute information, the number of the objects included in the "artist" is shown in the horizontal axis, and the number N of reproduction times is shown in the vertical axis. Note that the number N of reproduction times shown in Fig. 5A is calculated based on a total number of reproduction times in the external devices 30 to 50 as population. As shown in Fig. 5A, when "artist" is focused as the attribute information in the contents, the number N of reproduction times becomes smaller in the order of "Ar1," "Ar4," "Ar2," and "Ar3." Therefore, the priority calculation portion 112 adds the highest priority to the contents associated with the "Ar1." The priority becomes lower in the order of "Ar4," "Ar2," and "Ar3."

Of course, the attribute information focused when calculating the priority is not limited to one attribute information. The priority can be calculated based on a plurality of attribute information.

The reproduction order determining portion 113 determines the reproduction order of the contents based on the priority calculated by the priority calculation portion 112. Fig. 5B is a diagram showing a relation between the priority and the reproduction order. In Fig. 5B, the reproduction order (1 to 4) of the contents determined according to the priority shown in Fig. 5A is shown. In an example of Fig. 5B, the content including the object "Ar1" is the earliest in the reproduction order compared to the contents including other objects (Ar2, Ar3, Ar4). In addition, the content including the object "Ar3" is the latest in the reproduction order compared to the contents including other objects (Ar1, Ar2, Ar4). In the above described first embodiment, the reproduction order determining portion 113 creates a play list P1 in which the reproduction order is determined, and then the play list P1 is recorded in the flash memory 14. In other words, the reproduction order of the content having a higher priority is earlier, and the reproduction order of the content having a lower priority is later.

As explained above, the reproduction order determining portion 113 determines the reproduction order of the contents according to the priority. The priority is calculated by the priority calculation portion 112 based on the number of reproduction times of the contents.

The priority calculation portion 112 determines the priority based on the number of reproduction times counted by focusing on the artist and the number of reproduction times counted by focusing on the genre. Therefore, the reproduction order determining portion 113 determines the reproduction order based on the number of reproduction times counted by focusing on the artist and the number of reproduction times counted by focusing on the genre. In other words, the reproduction order determining portion 113 determines the reproduction order of the contents based on the number of reproduction times corresponding to the attribute information.

The content request portion 114 requests the contents via the communication IF 15 according to the reproduction order (play list P1) determined by the reproduction order determining portion 113. Then, a control portion 115 controls the audio output portion (reproducing portion) 17 to reproduce the contents transmitted by streaming in accordance with the request of the content request portion 114.

Next, a configuration of the external devices 30 to 50 will be explained.

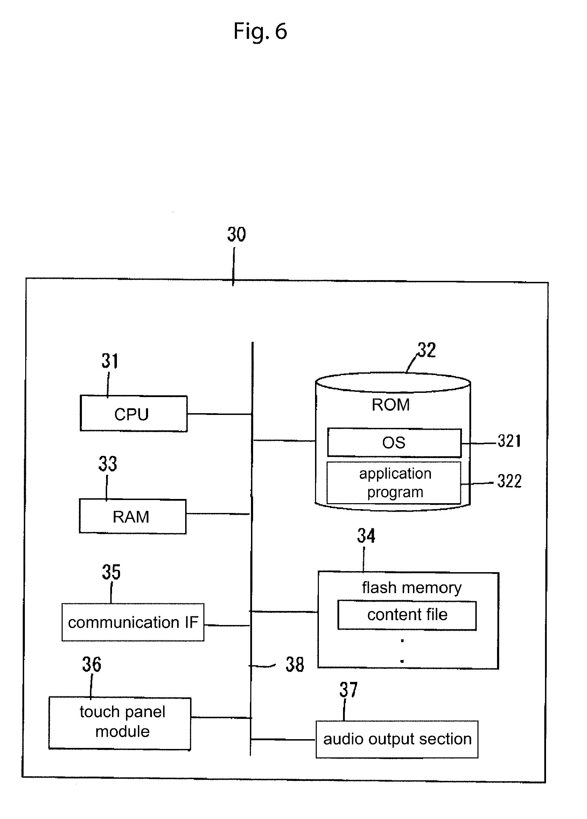

Fig. 6 is a block diagram showing a configuration of an external device 30. Note that the explanation of the configuration of the external devices 40 and 50 is omitted because the configuration is same as the configuration of the external device 30.

In the first embodiment, the external device 30 is realized by a smart phone or a small-sized personal computer. Of course, the external devices 30 to 50 can be any devises if the device can transmit the contents by streaming.

The external device 30 includes a CPU 31, a ROM 32, a RAM 33, a flash memory 34, a communication IF 35, a touch panel module 36, an audio reproducing portion 37, and a bus 38. Each part of the external device 30 is connected with each other via the bus 38.

The CPU 31 totally controls driving hardware according to programs recorded in the ROM 32.

In the ROM 32, an OS 321 and an application program 322 are recorded. The OS 321 enables the CPU 31 to control driving the hardware. The application program 322 is used for recording the content information Cd shown in Fig. 4 in accordance with the reproduction of the contents reproduced by the audio reproducing portion 37. The CPU 31 expands the OS 321 and the application program 322 in the RAM 33 and executes them to record the content information Cd or perform various operations according to the request input from the display device 10.

Content files (contents) are recorded in the flash memory 34. In addition, the content information Cd (Fig. 4) created by the CPU 31 is recorded in the flash memory 34. Note that the first embodiment is explained by using music contents as an example. Of course, the present invention can be also applied to other than the music contents.

(2) Recording method of content information Cd

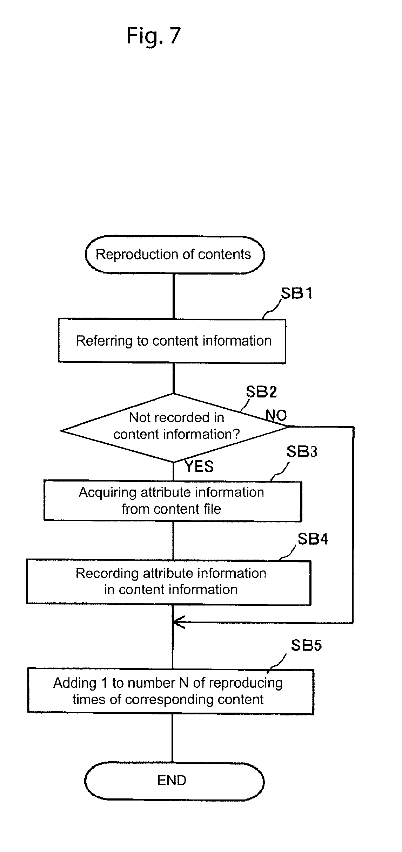

Next, the recording method of the content information Cd executed by the external devices 30 to 50 will be explained. Fig. 7 is a flow chart explaining a method to record the content information Cd in the external device 30. The flow chart shown in Fig. 7 is performed when the user operates the external device 30 to reproduce a content. The content information Cd shown in Fig. 4 is recorded. Note that the explanation for the external devices 40 and 50 is omitted because th method for recording the content information Cd is same.

In the step SB1, the CPU 31 refers to the content information Cd and judges whether or not the content to be reproduced now is recorded in the content information Cd. For example, the CPU 31 judges a type of the content from the content ID applied to a header of the content file or the attribute information (artist ID, genre ID).

If the content to be reproduced now is not recorded in the content information Cd (step SB2: YES), the CPU 31 acquires the information, such as the attribute information, included in the content file in the step SB3. In the first embodiment, since the attribute information is the "artist" and the "genre," the CPU 31 acquires the attribute information of the "artist" and the "genre" from the content file. In the step SB4, the CPU 31 records the information, such as the content ID and the attribute information, in the content information Cd.

In the step SB5, the CPU 31 adds 1 to the number of reproduction times of the corresponding content in the content information Cd. Note that the CPU 31 can add 1 to the number of reproduction times at a timing when the reproduction of the content is finished.

On the other hand, if the content to be reproduced now is recorded in the content information Cd (step SB2: NO), the CPU 11 goes to the step SB5. In other words, since the information of the content to be reproduced is recorded in the content information Cd, the CPU 31 does not record the attribute information or other information. Instead, the CPU adds 1 to the number of reproduction times of the content corresponding to the content information Cd.

The recording of the content information Cd executed by the external device 30 is explained above.

As explained above, the external device 30 can be connected with the external reproducing device. The external device 30 has the communication portion to be connected with the external reproducing device. Also, as explained above, the external device 30 stores the content information in which at least the content ID and the number of reproduction times of the content are associated with each other. The external device 30 has a memory portion to stores the content information. Note that the content information further includes the attribute information of the content. The attribute information is associated with the content ID and stored in the memory portion. The attribute information includes at least either of the artist and the genre. The content information includes the terminal ID that is assigned with the external device. The terminal ID is associated with the content ID and stored in the memory portion.

The external device 30 transmits the content information to the external reproducing device via the communication portion. Thus, the external device 30 can record the contents and reproduce the contents.

(3) Reproducing method of contents

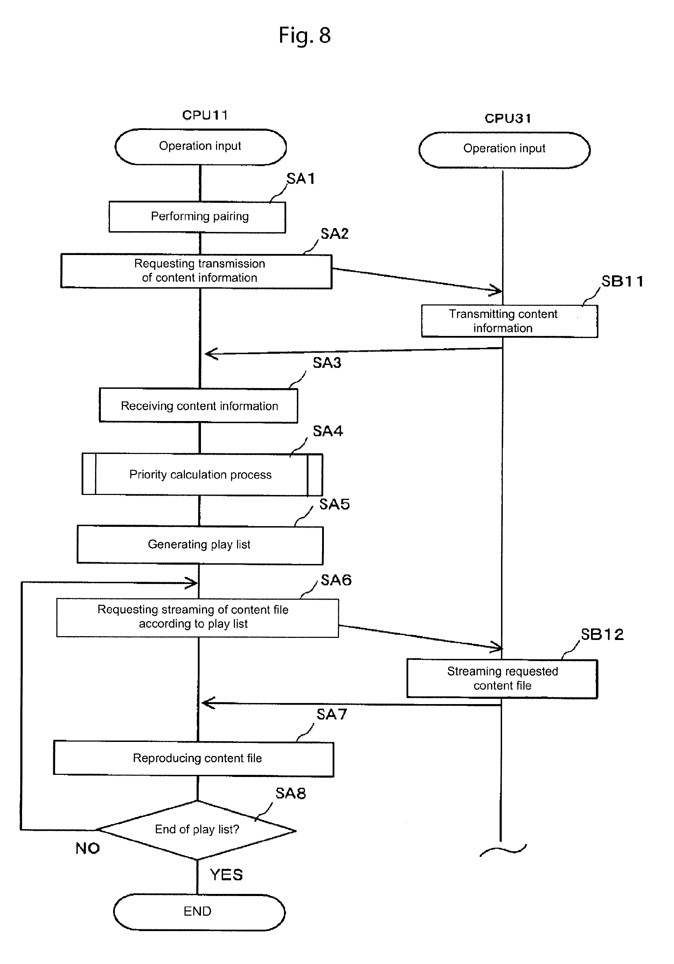

Next, the reproducing method of the contents executed in the reproducing system 100 will be explained. Fig. 8 is a flow chart showing the reproducing method of the content. For example, the flow chart shown in Fig. 8 is performed when the user operates the external devices 30 to 50 to reproduce the contents in the display device 10.

In the step SA1, the CPU 11 specifies a wireless network setting in order to perform pairing between the reproducing device and the external device to be connected. In other words, in the step SA1, the CPU 11 specifies SSID and security settings that are required when communicating with the external devices 30 to 50 via the wireless network. Namely, the display device 10 functions as a master unit of the external devices 30 to 50 in the present invention.

In the step SA2, the CPU 11 (acquisition portion 111) requests the external devices 30 to 50 via the communication IF 15 to transmit the content information Cd. If the external devices 30 to 50 receive the request to transmit the content information Cd, in the step SB 11, the CPU 31 transmits the content information Cd recorded in the flash memory 34.

In the step SA3, the CPU 11 receives the content information Cd (Fig. 4) transmitted from the external devices 30 to 50. Therefore, the CPU 11 records the content information Cd (Fig. 4) of each of the external devices 30 to 50 in the flash memory 14.

In the step SA4, the CPU 11 (priority calculation portion 112) executes a priority calculation process to calculate the priority of each content based on the number N of reproduction times included in the acquired content information Cd. In other words, the CPU 11 counts the number N of reproduction times from the content information Cd acquired in the step SA3 by focusing on a predetermined attribute information. Then the priority of individual content to be reproduced in the display device 10 is calculated. Detailed method for calculating the priority will be explained later in (4) Calculating method of priority.

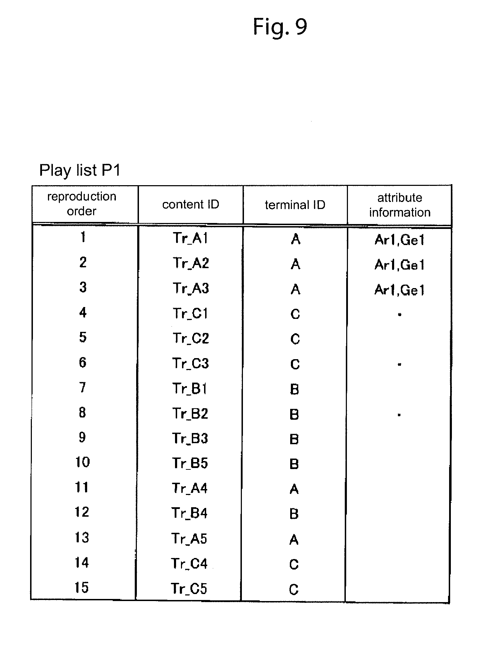

In the step SA5, the CPU 11 (reproduction order determining portion 113) creates the play list P1, which indicates the reproduction order of the contents, according to the priority of the each content calculated in the step SA4. Fig. 9 is a diagram showing the play list PI as an example. In the play list P1, the reproduction order (1 to 15) of the contents to be transmitted by streaming from the external devices 30 to 50 to the display device 10 is recorded. In the play list P1, the content ID, the terminal ID, and related information are also recorded while being associated with each other.

In the step SA6, the CPU 11 (the content request portion 114 in the control portion 115) requests the external devices 30 to 50 to transmit the content file by streaming according to the play list P1 created in the step SA5. As an example, the CPU 11 broadcasts the request of transmitting the contents via the communication IF 15 in order from the top of a reproduction order POd of the play list P1. In the request of transmitting, the content ID that is associated with the reproduction order Pod is transmitted to the terminal 1D that is associated with the corresponding reproduction order Pod of the play list P1. Therefore, in the step SB12, among the external devices 30 to 50 that receive the request of transmitting, the external device that corresponds to the terminal ID transmits the content file corresponding to the content ID to the display device 10 by streaming.

At that time, one of the external devices 30 to 50 that corresponds to the terminal ID transmits the requested content file to the external display device 10 via the communication portion.

In the step SA7, the CPU 11 (control portion 115) reproduces the content file transmitted from the external device by the request of the step SA6. Here, a decompression of the content file and other necessary processes are executed in the external devices 30 to 50 in advance. Therefore, only the reproduction of the transmitted content file is required for the display device 10. In case encryption of the contents is specified between the display device 10 and the external devices 30 to 50, decryption of the contents is required.

If the reproduction order is not reached to an end of the play list P1 (step SA8: NO), the CPU 11 is returned to the step SA6 and repeats the steps SA6 and SA7.

If the reproduction order is reached to the end of the play list P1 (step SA8: YES), the CPU 11 finishes requesting the contents to the external devices 30 to 50.

In the processes explained above, it is said that the control portion 115 acquires the contents corresponding to the reproduction order via the communication IF 15, which corresponds to the communication portion. At this time, the content information acquired by the acquisition portion 11 includes the terminal ID that is assigned for the external devices 30 to 50. Therefore, the control portion 115 acquires the contents corresponding to the reproduction order from one of the external devices 30 to 50 having the terminal ID that is assigned for the external device containing the content. Note that the communication IF 15, which is the communication portion, can be connected with the external network. Therefore, the control portion 115 acquires the contents corresponding to the reproduction order from the external devices 30 to 50 via the external network by transmitting the contents by streaming.

(4) Calculating method of priority

Next, the calculating method of the priority shown in the step SA4 of Fig. 8 will be explained.

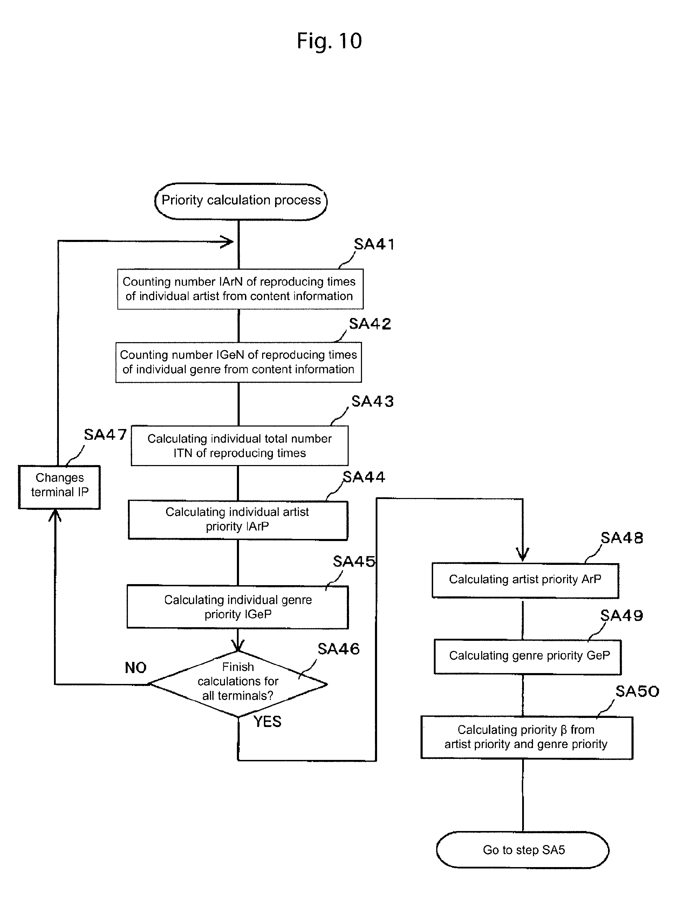

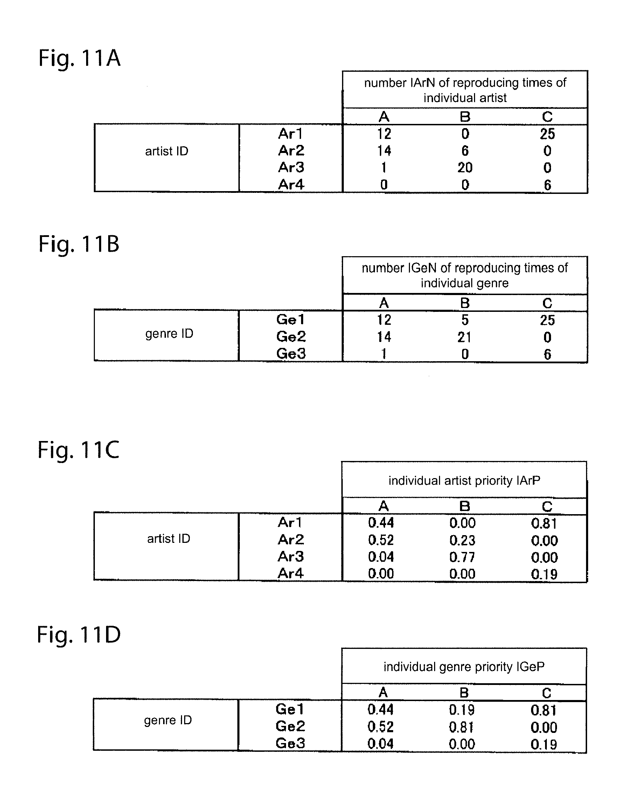

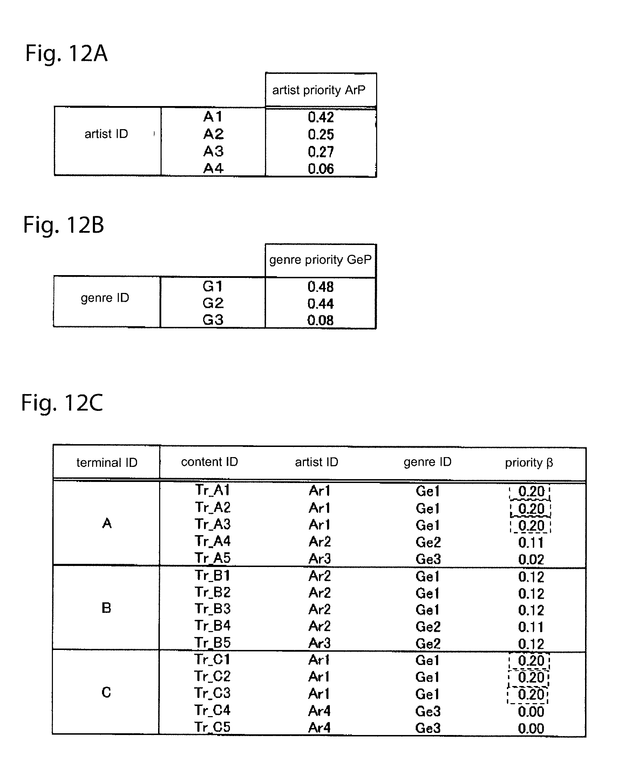

Fig. 10 is a flow chart explaining the calculating method of the priority executed in the step SA4. In the calculating method of the priority shown in Fig. 10, the priority is calculated by focusing on two attribute information of "artist" and "genre," which correspond respectively to the first attribute information and the second attribute information. Figs. 11A to 11D and 12A to 12C are diagrams explaining the calculating method of a priority β of each content from the content information Cd.

In the explanation below, a suffix "i," "j," "k," or "1" is added to the counted values in accordance with the variable focused when calculating the values. In other words, the number N of reproduction times recorded in the content information Cd is associated with the terminal ID, the content ID, and the attribute information. Therefore, the values can be calculated by focusing on each of the terminal ID, the content ID, and the attribute information. When a particular value is counted by focusing on the terminal ID (variable), the suffix "i" is added to the value. When a particular value is counted by focusing on the content ID (variable), the suffix "j" is added to the value. When a particular value is counted by focusing on the attribute information (variable), the suffix "k" or "1" is added to the value. Two or more variables can be used in combination when focusing the variable. In such a case, two or more suffixes are added to the value. When the attribute information is the artist, the suffix "k" is used, for example. When the attribute information is the genre, the suffix "1" is used, for example.

In the step SA41, the CPU 11 counts the number of reproduction times of the contents having the same artist ID from the content information Cd that belongs to a particular terminal ID indicating one of the external devices 30 to 50. Here, the counted number of reproduction times is referred to as a number IArN (i, k) of reproduction times of individual artist. The suffix "i" indicates the terminal ID, and the suffix "k" indicates the artist.

Fig. 11A is a diagram showing the number IArN (i, k) of reproduction times of individual artist counted in the step SA41. In Fig. 11A, the artist ID (Ar1 to Ar4) is listed vertically as a variable, the terminal ID (A to C) is listed horizontally as a variable, and the number IArN of reproduction times of individual artist is listed as an item in the table. In Fig. 11A, the number IArN (i, k) of reproduction times of individual artist is counted in each object "Ar1," "Ar2," "Ar3," and "Ar4" of the artist ID from the content information Cd of each terminal ID (i = A to C).

In the step SA42, the CPU 11 counts the number of reproduction times of the content having the same genre ID from the content information Cd that belongs to a particular terminal ID. Here, the counted number of reproduction times is referred to as a number IGeN (i, 1) of reproduction times of individual genre.

Fig. 11B is a diagram showing the number IGeN (i, 1) of reproduction times of individual genre counted in the step SA42. In Fig. 11B, the genre ID (Ge1 to Ge3) is listed vertically as a variable, the terminal ID (A to C) is listed horizontally as a variable, and the number IGeN (i, 1) of reproduction times of individual genre is listed as an item in the table. Here, "i" indicates the terminal ID and "1" indicates the genre. In Fig. 11B, the number IGeN (i, 1) of reproduction times of individual genre is counted in each object "Ge1," "Ge2," and "Ge3" of the genre ID from the content information Cd of each terminal ID (i = A to C).

In the step SA43, the CPU 11 counts a total number of the number N of reproduction times of the content information Cd that belongs to a particular terminal ID. Here, the total number is referred to as an individual total number ITN (i) of reproduction times.

In the step SA44, the CPU 11 calculates an individual artist priority IArP (i, k) of a particular terminal ID from Formula 1 below. The individual artist priority IArP (i, k) is calculated by dividing the number IArN (i, k) of reproduction times of individual artist counted in the step SA41 by the individual total number ITN (i) of reproduction times acquired in the step SA43. [Formula 1]

$$\text{Individual artist priority IArP (i, k) = Number IArN (i, k) of reproduction times of}$$
$$\text{individual artist} \div \text{Total number ITN (i) of reproduction times}$$

Dividing the number IArN (i, k) of reproduction times of individual artist by the individual total number ITN (i) of reproduction times described above is equivalent to calculating a ratio of the number of reproduction times of a particular artist k in the external device having a particular terminal ID.

In Fig. 11C, the artist ID (Ar1 to Ar4) is listed vertically as a variable, the content ID (A to C) is listed horizontally as a variable, and the individual artist priority IArP is listed as an item in the table. In other words, the individual artist priority IArP is calculated in each object "Ar1," "Ar2," "Ar3," and "Ar4" of the artist ID.

In the step SA45, the CPU 11 calculates an individual genre priority IGeP (i, 1) of a particular terminal ID from Formula 2 below. The individual genre priority IGeP (i, 1) is calculated by dividing the number IGeN (i, 1) of reproduction times of individual genre counted in the step SA42 by the individual total number ITN (i) of reproduction times acquired in the step SA43.

[Formula 2]

Individual genre priority IGeP (i, l) = Number IGeN (i, l) of reproduction times of individual genre ÷ Total number ITN (i) of reproduction times

Dividing the number IGeN (i, 1) of reproduction times of individual genre by the individual total number ITN (i) of reproduction times described above is equivalent to calculating a ratio of the number of reproduction times of a particular genre 1 in the external device having a particular terminal ID.

Fig. 11D is a diagram showing the individual genre priority IGeP (i, 1) calculated in the step SA45. In Fig. 11D, the genre ID (Ge1 to Ge3) is listed vertically as a variable, the terminal ID (i = A to C) is listed horizontally as a variable, and the individual genre priority IGeP is listed as an item in the table. In other words, a genre priority GeP is calculated in each object "Ge1," "Ge2," and "Ge3" of the genre ID.

If the individual artist priority IArP and the individual genre priority IGeP are not calculated for all terminal IDs (step SA46: NO), the CPU 11 changes the terminal ID to be targeted in the step SA47. Then, the CPU 11 repeats the processes of the steps SA41 to SA45.

On the other hand, if the individual artist priority IArP and the individual genre priority IGeP are calculated for all terminal IDs (step SA46: YES), the CPU 11 goes to the step SA48.

In the step SA48, the CPU 11 calculates an average value of the individual artist priority IArP having a particular artist ID from Formula 3 below. Here, the average value of the individual artist priority IArP is referred to as an artist priority ArP (k).

[Formula 3]

$$\text{Artist priority ArP (k)} = \sum_i IArP(i,k) \div \sum_i \sum_k IArP(i,k)$$

Here, $\sum_i IArP(i,k)$ indicates a total sum of the individual artist priority IArP of a particular artist ID (k) in all terminal IDs (i), and $\sum_i \sum_k IArP(i,k)$ indicates a total sum of the individual artist priority IArP of all artist IDs (k) in all terminal IDs (i).

As explained above, the artist priority ArP (k) is a value acquired by dividing a total sum of the priority of the particular artist in all external devices by a total sum of the priority of all artists in all terminals. Therefore, this is equivalent to calculating an average value of the priority of the particular artist in all terminals.

In other words, a ratio of the number of reproduction times is calculated by focusing on the artist in each of a plurality of external devices 30 to 50, an average value of the ratio of the plurality of external devices 30 to 50 is calculated, and the reproduction order of the contents is determined based on the average value.

Namely, the priority calculation portion 112 of the reproduction order determining portion 113 calculates the ratio of the number of reproduction times corresponding to a particular attribute information in each of the external devices 30 to 50 with respect to the total number of reproduction times in the external devices 30 to 50, and calculates the priority based on the average value of the ratio of all of the external devices 30 to 50. Therefore, the reproduction order determining portion 113 determines the reproduction order of the contents based on the average value of the ratio of the number of reproduction times corresponding to each of the attribute information in each of the external devices with respect to the total number of reproduction times.

Fig. 12A is a table showing the artist priority ArP (k) calculated in the step SA48. In Fig. 12A, the artist priority ArP (k) is calculated for each artist ID, which is vertically listed.

In the step SA49, the CPU 11 calculates an average value of the individual genre priority IGeP having a particular genre ID from Formula 4 below. Here, the average value of the individual genre priority IGeP is referred to as a genre priority GeP (1).

[Formula 4]

$$\text{Genre priority GeP (l)} = \sum_i IGeP(i,l) \div \sum_i \sum_l IGeP(i,l)$$

Here, $\sum_i IGeP(i,l)$ indicates a total sum of the individual genre priority IGeP of a particular genre ID (1) in all terminal IDs (i), and $\sum_i \sum_l IGeP(i,l)$ indicates a total sum of the individual genre priority IGeP of all genre IDs (1) in all terminal IDs (i).

Same as the case of the artist, the genre priority GeP (1) is a value acquired by dividing a total sum of the priority of the particular genre in all external devices by a total sum of the priority of all genres in all terminals. Therefore, this is equivalent to calculating an average value of the priority of the particular genre in all terminals. In other words, a ratio of the number of reproduction times is calculated by focusing on the genre in each of a plurality of external devices 30 to 50, an average value of the ratio of the plurality of external devices 30 to 50 is calculated, and the reproduction order of the contents is determined based on the average value. Therefore, the reproduction order determining portion 113 determines the reproduction order of the contents based on the average value of the ratio of the number of reproduction times corresponding to the attribute information in each of the external devices with respect to the total number of reproduction times.

Fig. 12B is a table showing the genre priority GeP (1) calculated in the step SA49. In Fig. 12B, the genre priority GeP is calculated for each genre ID, which is vertically listed.

In the step SA50, the CPU 11 calculates the priority β for each content from Formula 5 below. The priority β is calculated by multiplying the artist priority ArP(k) related to the content and the genre priority GeP(1) related to the content.

[Formula 5]

$$\text{Priority } \beta = \text{Artist priority } ArP(k) \times \text{genre priority } GeP(l)$$

Fig. 12C is a diagram showing the priority P applied to the content information Cd for each of the external devices. In Fig. 12C, the priority β surrounded by dotted lines is high. Therefore, in the step SA5 in Fig. 8, the CPU 11 makes the reproduction order of the contents so that the content having a high priority P is listed earlier.

As explained above, the reproducing device of the first embodiment has the following effects. The priority of each content is calculated based on the number of reproduction times of the content in each of the external devices, and the reproduction order of the each content is determined according to the priority. In accordance with the reproduction order determined based on the number of reproduction times, the content corresponding to the reproduction order is requested to each of the external devices via the communication portion. Therefore, when the contents are transmitted from a plurality of external devices to the reproducing device, the reproduction order of the content can be determined according to the preference of each user, and the content file can be transmitted from each of the external devices according to the determined reproduction order. In other words, the user is not required a complicated operation of the external devices. In particular, since the number of reproduction times is based on the attribute information, the reproduction order of the contents can be determined while categorized by the attribute information.

In addition, the reproduction order of the contents can be determined by focusing on a particular attribute information, the preference of the user can be efficiently reflected to the reproduction order.

Furthermore, if a plurality of attribute information is combined, the preference of the user can be more efficiently reflected to the reproduction order.

2. Second embodiment:

When calculating the priority to determine the reproduction order, a high priority can be given to the content having large number of reproduction times in a particular external device.

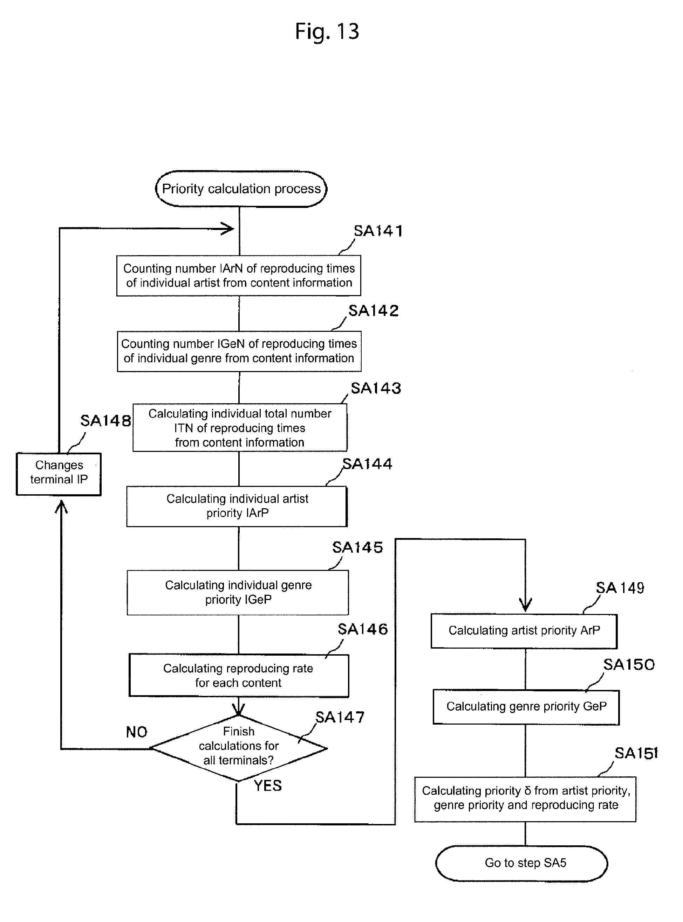

Fig. 13 is a flow chart explaining the calculating method of the priority executed in the step SA4 of the second embodiment. In the second embodiment shown in Fig. 13, same as the first embodiment, two attribute information "artist" and "genre" are focused when calculating the priority.

Note that the items using names and symbols same as the first embodiment indicate same items as the first embodiment. Therefore, explanation of the same items is omitted in the second embodiment.

In the step SA141 shown in Fig. 13, the CPU 11 counts the number of reproduction times of the contents having a particular artist ID from the content information Cd that belongs to a particular terminal ID. Here, the number of reproduction times is referred to as a number IArN (i, k) of reproduction times of individual artist.

In the step SA142, the CPU 11 counts the number of reproduction times of the contents having a particular genre ID from the content information Cd that belongs to a particular terminal ID. Here, the number of reproduction times is referred to as a number IGeN (i, 1) of reproduction times of individual genre.

In the step SA143, the CPU 11 counts a total number of the number N of reproduction times of the content information Cd that belongs to a particular terminal ID. The total number is referred to as an individual total number ITN (i) of reproduction times.

In the step SA144, the CPU 11 calculates the individual artist priority IArP (i, k) from the above described Formula 1. The individual artist priority IArP (i, k) is calculated by dividing the number IArN of reproduction times of individual artist counted in the step SA141 by the individual total number ITN of reproduction times acquired in the step SA143.

In the step SA145, the CPU 11 calculates the individual genre priority IGeP (i, 1) from the above described Formula 2. The individual genre priority IGeP (i, 1) is calculated by dividing the number IGeN of reproduction times of individual genre counted in the step SA142 by the individual total number ITN of reproduction times 1 acquired in the step SA143.

In the step SA146, the CPU 11 calculates a ratio $\gamma$ of reproduction from Formula 6 below. The ratio $\gamma$ is calculated by dividing the number N of reproduction times (i, j) of each content by the individual total number ITN (i) of reproduction times acquired in the step SA143.

[Formula 6]

$$\text{Ratio } \gamma \text{ of reproduction} = \text{reproduction times (i, j)} \div \text{Individual total number ITN (i)}$$

If the individual artist priority IArP, the individual genre priority IGeP, and the ratio $\gamma$ of reproduction are not calculated for all terminal IDs (step SA147: NO), the CPU 11 changes the terminal ID to be targeted in the step SA148. Then, the CPU 11 repeats the processes of the steps SA141 to SA146.

On the other hand, if the individual artist priority IArP, the individual genre priority IGeP, and the ratio $\gamma$ of reproduction are calculated for all terminal IDs (step SA147: YES), the CPU 11 goes to the step SA149.

In the step SA149, the CPU 11 calculates an average value of the individual artist priority IArP having the particular artist ID from the above described Formula 3. The average value is referred to as an artist priority ArP(k).

In the step SA150, the CPU 11 calculates an average value of the individual genre priority IGeP having the particular genre ID from the above described Formula 4. The average value is referred to as a genre priority GeP(1).

In the step SA151, the CPU 11 calculates the priority $\delta$ of each content from Formula 7 below.

[Formula 7]

$$\text{Priority } \delta = (1 - \text{Artist priority ArP(k)}) \times (1 - \text{Genre priority GeP}) \times \text{Ratio } \gamma \text{ of reproduction}$$

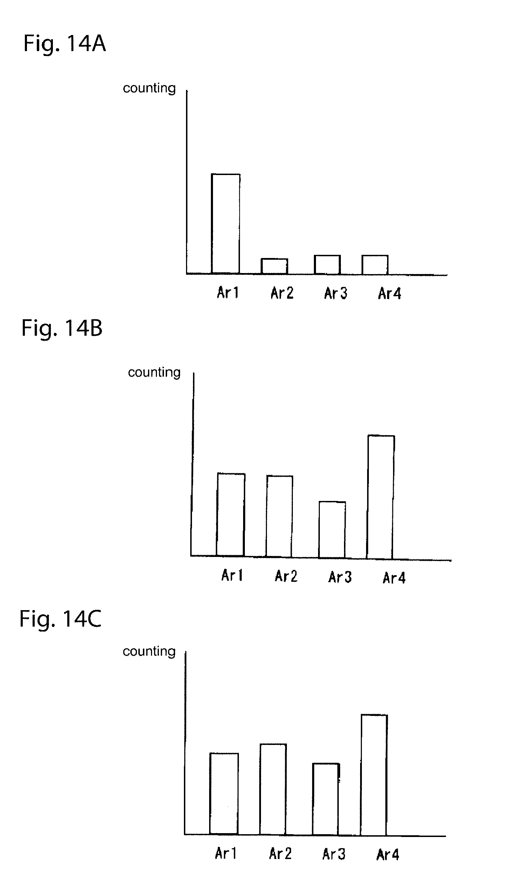

Figs. 14A, 14B and 14C are diagrams explaining the priority $\delta$ in the second embodiment. Fig. 14A shows a calculation of the number N of reproduction times in the external device 30 (the terminal ID = A) focusing a particular attribute information. Fig. 14B shows a calculation of the number N of reproduction times in the external device 40 (the terminal ID = B) focusing a particular attribute information. Fig. 14C shows a calculation of the number N of reproduction times in the external device 50 (the terminal ID = C) focusing a particular attribute information.

In the second embodiment, the value calculated by subtracting the artist priority ArP or the genre priority GeP from 1 is used. The calculated value becomes smaller as the artist priority ArP or the genre priority GeP becomes larger. In addition to the value described in the present embodiment, a reciprocal number and an inverse proportion have the same characteristic. Therefore, the values having such a characteristic is collectively referred to as "reciprocal-like value" in the present invention.

As shown in Fig. 14A, in the external device 30, the number N of reproduction times is larger in the artist ID (Ar1) and the ratio $\gamma$ of reproduction is higher in the artist ID (Ar1) compared to other artist IDs (Ar2 to Ar4). However, when the counted numbers N of reproduction times are compared in the external devices 30 to 50, the counted number of the artist ID (Ar1) of the external device 30 is not large.

Therefore, even if the counted number of the content is small and the priority (artist priority ArP, genre priority GeP) is low, if the content has the attribute information having high ratio $\gamma$ of reproduction, the priority $\delta$ of the content can be higher by adding the reciprocal-like values of the artist priority ArP and the genre priority GeP as shown in Fig. 14A. In other words, the priority of the content can be higher for the content having higher ratio of being reproduced in a particular external device even if the content belongs to the artist and the genre that have lower ratio on average among all the external devices. Of course, the present embodiment is not limited to the above example. For example, the ratio $\gamma$ of reproduction can be directly used as the priority $\delta$.

As explained above, the reproduction order determining portion 113 acquires the number of reproduction times corresponding to each of the attribute information in each of the external devices 30 to 50, calculates a first ratio of the number of reproduction times with respect to a total number of reproduction times in each of the plurality of external devices, calculates an average value of the first ratio of the plurality of external devices 30 to 50, calculates a second ratio of the number of reproduction times of the content with respect to the total number of reproduction times in one of the plurality of external devices 30 to 50, and determines the reproduction order of the content based on the second ratio and the average value. Namely, since the ratio of the number of reproduction times of the content in one of the external devices is added into consideration, the content having high ratio of number of reproduction times in a particular external device can be expected to be listed in the reproduction order of high priority even if the content has a low ratio of the number of reproduction times in other external devices. In order to do this, as an example, the reciprocal-like value of the average value is calculated. The calculated value is greater when the average value is smaller. Then, the reciprocal-like value is multiplied to the ratio of the number of reproduction times of the content in each of the external devices.

In addition, the reproduction order determining portion 113 changes the reproduction order of the content so that the content having a high ratio of number of the reproduction times in the external devices 30 to 50 is listed in a prior order.

Then, in the step SA5 in Fig. 8, the CPU 11 creates the play list P1 in which the reproduction order of the contents is specified according to the calculated priority $\delta$.

As explained above, the reproducing device of the second embodiment has the following effects in addition to the effects of the first embodiment.

The priority of the content can be high if the number of reproduction times of the content is high in a particular external device. Therefore, even if the number of reproduction times of the content is not high on average among the plurality of external devices, the priority of the content can be high. Consequently, the reproduction order can be flexibly determined.

3. Third embodiment:

When same contents are listed in the play list P1, only one of the same contents can be reproduced.

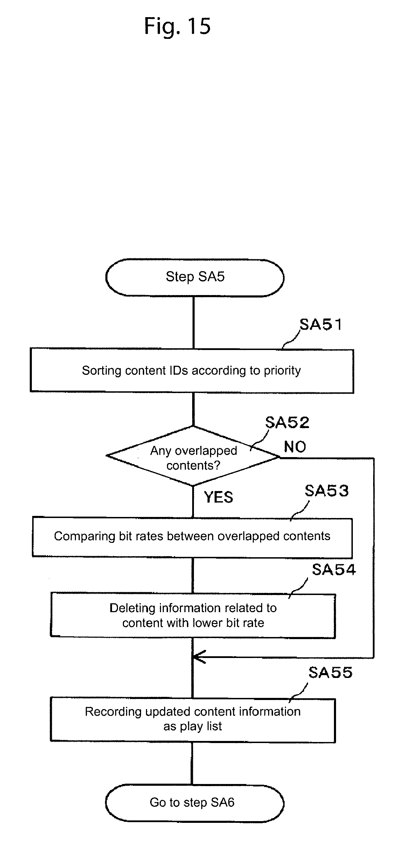

Fig. 15 is a flow chart showing a process executed in the step S5 of Fig. 8 in the third embodiment. In the flow chart shown in Fig. 15, when overlapped contents are existed, only the content having high bit ratio is added into the reproduction order. The content having high bit rate is good in reproduction quality. Therefore, the content of higher quality can be selected as the content to be reproduced. Of course, the condition to select the content is not limited to the bit rate.

In the step SA51, the CPU 11 sorts the content IDs of the combined content information according to the priority. The combined content information is a base of the play list P1.

If the overlapped contents are existed (step SA52: YES), the CPU 11 goes to the step SA53. Here, the method for judging the overlapping of the contents can be based on the matching of the attribute information "title" and "artist" of the contents, for example.

In the step SA53, the CPU 11 compares the bit rates of the overlapped contents. For example, the bit rate is saved as the attribute information of the content information.

In the step SA54, the CPU 11 deletes the information (content ID, attribute information) of the content having low bit rate among the overlapped contents from the combined content information.

In the step SA5, the CPU 11 records a revised list on the flash memory 14 as the play list P1.

On the other hand, if the overlapped contents are not existed (step S52: NO), the CPU 11 goes to the step SA55 and records the revised list in the flash memory 14 as the play list P1. Then, in the step SA55, the CPU 11 requests the contents to the external devices 30 to 50 based on the recorded play list P1.

As explained above, the third embodiment has the following effects in addition to the effects of the first embodiment.

The overlapped contents are prevented from being reproduced redundantly.

Thus, when the overlapped contents are existed, the reproduction order determining portion 113 adds only one of the contents into the reproduction order. When the overlapped contents are existed, the reproduction order determining portion 113 uses the bit rate of the content as a selection criteria to determine whether or not to add the content into the reproduction order.

4. Other embodiments:

The contents recorded in the reproducing device itself can be added to the reproduction information of the contents determined by the reproducing device. In other words, same as the external devices 30 to 50, the reproducing device can record the content information Cd of the contents recorded in the reproducing device itself according to the flow chart shown in Fig.7. Then, according to the flow chart shown in Fig. 8, the reproducing device can determine the reproduction order including the contents recorded in the reproducing device itself when the reproducing device acquires the content information Cd from the external devices 30 to 50.

Namely, the reproducing device stores the contents and the content information in which the content ID and the number of reproduction times of the content are associated with each other in the memory portion. Then, the reproduction order determining portion 113 adds the contents into the reproduction order based on the content information stored in the memory portion.

The display device mounted on a vehicle is used merely as an example of the reproducing device. For example, stationary type players and terminals can be also used as the reproducing device.

The music contents are used merely as an example of the contents.

For example, movie contents can be also used as the contents.

Note that, this invention is not limited to the above-mentioned embodiments. Although it is to those skilled in the art, the following are disclosed as the one embodiment of this invention.

- Mutually substitutable members, configurations, etc. disclosed in the embodiment can be used with their combination altered appropriately.
- Although not disclosed in the embodiment, members, configurations, etc. that belong to the known technology and can be substituted with the members, the configurations, etc. disclosed in the embodiment can be appropriately substituted or are used by altering their combination.
- Although not disclosed in the embodiment, members, configurations, etc. that those skilled in the art can consider as substitutions of the members, the configurations, etc. disclosed in the embodiment are substituted with the above mentioned appropriately or are used by altering its combination.

**Claims**

1. A reproducing device, comprising:

    a communication portion that can be connected with an external device;
    an acquisition portion that acquires a content information from the external device, the content information including a content ID and a number of reproduction times of a content; and
    a reproduction order determining portion that determines a reproduction order of the content based on the number of reproduction times.

2. The reproducing device according to claim 1, wherein
    the content information further includes an attribute information of the content, and
    the reproduction order determining portion determines the reproduction order of the content based on the number of reproduction times corresponding to the attribute information.

3. The reproducing device according to claim 1 or 2, wherein
    the acquisition portion acquires the content information from a plurality of external devices that can be connected with the communication portion.

4. The reproducing device according to claim 3, wherein
    the acquisition portion acquires the number of reproduction times corresponding to the attribute information in each of the plurality of external devices,
    the reproduction order determining portion calculates a ratio of the number of reproduction times with respect to a total number of reproduction times in each of the plurality of external devices, calculates an average value of the ratio of the plurality of external devices, and determines the reproduction order of the content based on the average value.

**5.** The reproducing device according to claim 3, wherein
the acquisition portion acquires the number of reproduction times corresponding to the attribute information in each of the plurality of external devices,
the reproduction order determining portion calculates a first ratio of the number of reproduction times with respect to a total number of reproduction times in each of the plurality of external devices, calculates an average value of the first ratio of the plurality of external devices, calculates a second ratio of the number of reproduction times of the content with respect to the total number of reproduction times in one of the plurality of external devices, and determines the reproduction order of the content based on the second ratio and the average value.

**6.** The reproducing device according to any one of claims 2 to 5, wherein
the attribute information includes at least either of an artist and a genre, and
the reproduction order determining portion determines the reproduction order of the content based on the number of reproduction times of the artist and the number of the reproduction times of the genre.

**7.** The reproducing device according to any one of claims 1 to 6, wherein
the reproduction order determining portion changes the reproduction order of the content so that the content having a high ratio of the number of the reproduction times in the external device is listed in a prior order.

**8.** The reproducing device according to any one of claims 1 to 7, wherein
when overlapped contents are existed, the reproduction order determining portion adds only one of the overlapped contents into the reproduction order.

**9.** The reproducing device according to any one of claims 1 to 8, further comprising:

a memory portion that stores the content and the content information in which the content ID and the number of reproduction times of the content are associated with each other; wherein
the reproduction order determining portion adds the content into the reproduction order based on the content information stored in the memory portion.

**10.** The reproducing device according to any one of claims 1 to 9, further comprising:

a control portion that acquires the content corresponding to the reproduction order via the communication portion.

**11.** The reproducing device according to claim 10, wherein
the content information acquired by the acquisition portion further includes a terminal ID that is assigned for the external device, and
the control portion acquires the content corresponding to the reproduction order from the external device having the terminal ID that is assigned for the external device containing the content.

**12.** The reproducing device according to claim 10 or 11, wherein
the communication portion can be connected with an external network, and the control portion acquires the content corresponding to the reproduction order from the external network.

**13.** An external device to record and reproduce a content, comprising:

a communication portion that can be connected with an external reproducing device; and
a memory portion that stores a content information in which a content ID and a number of reproduction times of the content are associated with each other, wherein
the external device transmits the content information to the external reproducing device via the communication portion.

**14.** The external device according to claim 13, wherein
the content information further includes an attribute information of the content, and
the attribute information is associated with the content ID and stored in the memory portion.

**15.** The external device according to claim 14, wherein
the attribute information includes at least either of an artist and a genre.

**16.** The external device according to any one of claims 13 to 15, wherein
the content information further includes a terminal ID that is assigned for the external device, and
the terminal ID is associated with the content ID and stored in the memory portion.

**17.** The external device according to any one of claims 13 to 16, wherein
the external device transmits the content required via the communication portion to the external reproducing device.

Fig. 1

100

10

PLAY LIST

MENU  (+)(−)

30                40                50

Tr_A_1          Tr_B_1          Tr_C_1
Tr_A_2          Tr_B_2          Tr_C_2
Tr_A_3          Tr_B_3          Tr_C_3
·                ·                ·
·                ·                ·
·                ·                ·

contents        contents        contents

## Fig. 2

10

12

ROM

11

CPU

OS — 121

13

program module — 122

RAM

15

14

communication IF

flash memory

16

17

touch panel module

audio output section

18

# Fig. 3

## Fig. 4A

content information Cd

| terminal ID | content ID | attribute ID | | number of reproducing times |
| --- | --- | --- | --- | --- |
| | | artist ID | genre ID | |
| A | Tr_A1 | Ar1 | Ge1 | 4 |
| | Tr_A2 | Ar1 | Ge1 | 3 |
| | Tr_A3 | Ar1 | Ge1 | 5 |
| | Tr_A4 | Ar2 | Ge2 | 14 |
| | Tr_A5 | Ar3 | Ge3 | 1 |

## Fig. 4B

content information Cd

| terminal ID | content ID | attribute ID | | number of reproducing times |
| --- | --- | --- | --- | --- |
| | | artist ID | genre ID | |
| B | Tr_B1 | Ar2 | Ge1 | 1 |
| | Tr_B2 | Ar2 | Ge1 | 2 |
| | Tr_B3 | Ar2 | Ge1 | 2 |
| | Tr_B4 | Ar2 | Ge2 | 1 |
| | Tr_B5 | Ar3 | Ge2 | 20 |

## Fig. 4C

content information Cd

| terminal ID | content ID | attribute ID | | number of reproducing times |
| --- | --- | --- | --- | --- |
| | | artist ID | genre ID | |
| C | Tr_C1 | Ar1 | Ge1 | 11 |
| | Tr_C2 | Ar1 | Ge1 | 9 |
| | Tr_C3 | Ar1 | Ge1 | 5 |
| | Tr_C4 | Ar4 | Ge3 | 3 |
| | Tr_C5 | Ar4 | Ge3 | 3 |

Fig. 5A

number N of
reproducing
times

Ar1    Ar2    Ar3    Ar4

Fig. 5B

| reproduction order | content name | artribute information (k) |
|---|---|---|
| 1 | content 1 | A r 1 |
| 2 | content 4 | A r 4 |
| 3 | content 2 | A r 2 |
| 4 | content 3 | A r 3 |

# Fig. 6

# Fig. 7

```
        ┌─────────────────────────┐
        (   Reproduction of contents  )
        └─────────────────────────┘
                     │         SB1
        ┌─────────────────────────┐
        │ Referring to content information │
        └─────────────────────────┘
                     │         SB2
                    ╱ ╲      NO
             Not recorded in ───────────┐
            content information?         │
                    ╲ ╱                  │
                  YES │        SB3       │
        ┌─────────────────────────┐      │
        │ Acquiring attribute information │  │
        │      from content file          │  │
        └─────────────────────────┘      │
                     │         SB4       │
        ┌─────────────────────────┐      │
        │ Recording attribute information │  │
        │      in content information     │  │
        └─────────────────────────┘      │
                     │◄─────────────────┘
                     │         SB5
        ┌─────────────────────────┐
        │ Adding 1 to number N of reproducing │
        │  times of corresponding content     │
        └─────────────────────────┘
                     │
        ┌─────────────────────────┐
        (           END           )
        └─────────────────────────┘
```

# Fig. 8

**CPU11**

Operation input

SA1 — Performing pairing

SA2 — Requesting transmission of content information

SA3 — Receiving content information

SA4 — Priority calculation process

SA5 — Generating play list

SA6 — Requesting streaming of content file according to play list

SA7 — Reproducing content file

SA8 — End of play list?

NO

YES

END

**CPU31**

Operation input

SB11 — Transmitting content information

SB12 — Streaming requested content file

Fig. 9

Play list P1

| reproduction order | content ID | terminal ID | attribute information |
|---|---|---|---|
| 1 | Tr_A1 | A | Ar1,Ge1 |
| 2 | Tr_A2 | A | Ar1,Ge1 |
| 3 | Tr_A3 | A | Ar1,Ge1 |
| 4 | Tr_C1 | C | • |
| 5 | Tr_C2 | C | |
| 6 | Tr_C3 | C | • |
| 7 | Tr_B1 | B | |
| 8 | Tr_B2 | B | • |
| 9 | Tr_B3 | B | |
| 10 | Tr_B5 | B | |
| 11 | Tr_A4 | A | |
| 12 | Tr_B4 | B | |
| 13 | Tr_A5 | A | |
| 14 | Tr_C4 | C | |
| 15 | Tr_C5 | C | |

# Fig. 10

Priority calculation process

SA41
Counting number IArN of reproducing times of individual artist from content information

SA42
Counting number IGeN of reproducing times of individual genre from content information

SA43
Calculating individual total number ITN of reproducing times

SA47
Changes terminal IP

SA44
Calculating individual artist priority IArP

SA45
Calculating individual genre priority IGeP

SA46
Finish calculations for all terminals?
NO
YES

SA48
Calculating artist priority ArP

SA49
Calculating genre priority GeP

SA50
Calculating priority β from artist priority and genre priority

Go to step SA5

## Fig. 11A

| | | number IArN of reproducing times of individual artist | | |
|---|---|---|---|---|
| | | A | B | C |
| artist ID | Ar1 | 12 | 0 | 25 |
| | Ar2 | 14 | 6 | 0 |
| | Ar3 | 1 | 20 | 0 |
| | Ar4 | 0 | 0 | 6 |

## Fig. 11B

| | | number IGeN of reproducing times of individual genre | | |
|---|---|---|---|---|
| | | A | B | C |
| genre ID | Ge1 | 12 | 5 | 25 |
| | Ge2 | 14 | 21 | 0 |
| | Ge3 | 1 | 0 | 6 |

## Fig. 11C

| | | individual artist priority IArP | | |
|---|---|---|---|---|
| | | A | B | C |
| artist ID | Ar1 | 0.44 | 0.00 | 0.81 |
| | Ar2 | 0.52 | 0.23 | 0.00 |
| | Ar3 | 0.04 | 0.77 | 0.00 |
| | Ar4 | 0.00 | 0.00 | 0.19 |

## Fig. 11D

| | | individual genre priority IGeP | | |
|---|---|---|---|---|
| | | A | B | C |
| genre ID | Ge1 | 0.44 | 0.19 | 0.81 |
| | Ge2 | 0.52 | 0.81 | 0.00 |
| | Ge3 | 0.04 | 0.00 | 0.19 |

## Fig. 12A

|  |  | artist priority ArP |
|---|---|---|
| artist ID | A1 | 0.42 |
| | A2 | 0.25 |
| | A3 | 0.27 |
| | A4 | 0.06 |

## Fig. 12B

|  |  | genre priority GeP |
|---|---|---|
| genre ID | G1 | 0.48 |
| | G2 | 0.44 |
| | G3 | 0.08 |

## Fig. 12C

| terminal ID | content ID | artist ID | genre ID | priority β |
|---|---|---|---|---|
| A | Tr_A1 | Ar1 | Ge1 | 0.20 |
| | Tr_A2 | Ar1 | Ge1 | 0.20 |
| | Tr_A3 | Ar1 | Ge1 | 0.20 |
| | Tr_A4 | Ar2 | Ge2 | 0.11 |
| | Tr_A5 | Ar3 | Ge3 | 0.02 |
| B | Tr_B1 | Ar2 | Ge1 | 0.12 |
| | Tr_B2 | Ar2 | Ge1 | 0.12 |
| | Tr_B3 | Ar2 | Ge1 | 0.12 |
| | Tr_B4 | Ar2 | Ge2 | 0.11 |
| | Tr_B5 | Ar3 | Ge2 | 0.12 |
| C | Tr_C1 | Ar1 | Ge1 | 0.20 |
| | Tr_C2 | Ar1 | Ge1 | 0.20 |
| | Tr_C3 | Ar1 | Ge1 | 0.20 |
| | Tr_C4 | Ar4 | Ge3 | 0.00 |
| | Tr_C5 | Ar4 | Ge3 | 0.00 |

# Fig. 13

```
        ( Priority calculation process )
                      │
                      │←──────────────────┐
                      ▼            SA141   │
        ┌──────────────────────────────┐  │
        │ Counting number IArN of      │  │
        │ reproducing times of         │  │
        │ individual artist from       │  │
        │ content information          │  │
        └──────────────────────────────┘  │
                      │          SA142     │
                      ▼                    │
        ┌──────────────────────────────┐  │
        │ Counting number IGeN of      │  │
        │ reproducing times of         │  │
        │ individual genre from        │  │
        │ content information          │  │
        └──────────────────────────────┘  │
                      │          SA143     │
   SA148              ▼                    │
        ┌──────────────────────────────┐  │
        │ Calculating individual total │  │
        │ number ITN of reproducing    │  │
        │ times from content info      │  │
   ┌──────────┐ └────────────────────────┘│
   │ Changes  │         │         SA144    │
   │ terminal │         ▼                  │
   │   IP     │ ┌──────────────────────┐   │
   └──────────┘ │ Calculating          │   │
        ▲       │ individual artist    │   │
        │       │ priority IArP        │   │
        │       └──────────────────────┘   │
        │                │       SA145      │
        │                ▼                  │
        │       ┌──────────────────────┐   │
        │       │ Calculating          │   │
        │       │ individual genre     │   │
        │       │ priority IGeP        │   │
        │       └──────────────────────┘   │
        │                │       SA146      │
        │                ▼                  │
        │       ┌──────────────────────┐   │
        │       │ Calculating          │   │
        │       │ reproducing rate     │   │
        │       │ for each content     │   │
        │       └──────────────────────┘   │
        │   NO           │       SA147      │
        └──────────◇ Finish calculations ◇ │
                   for all terminals?       │
                         │ YES              │
                         ▼                  │
```

SA149 — Calculating artist priority ArP

SA150 — Calculating genre priority GeP

SA151 — Calculating priority δ from artist priority, genre priority and reproducing rate

( Go to step SA5 )

Fig. 14A

Fig. 14B

Fig. 14C

# Fig. 15

```
        ┌─────────────────────────┐
        │        Step SA5         │
        └─────────────────────────┘
                     │
                     │          SA51
        ┌─────────────────────────┐
        │ Sorting content IDs according to priority │
        └─────────────────────────┘
                     │
                   SA52
                  ╱      ╲        NO
                 ╱  Any    ╲ ─────────────┐
                ╲ overlapped ╱             │
                 ╲ contents? ╱             │
                  ╲        ╱               │
                   YES    SA53            │
        ┌─────────────────────────┐        │
        │ Comparing bit rates between overlapped contents │
        └─────────────────────────┘        │
                     │          SA54       │
        ┌─────────────────────────┐        │
        │  Deleting information related to │ │
        │   content with lower bit rate    │ │
        └─────────────────────────┘        │
                     │◄───────────────────┘
                     │          SA55
        ┌─────────────────────────┐
        │ Recording updated content information │
        │          as play list           │
        └─────────────────────────┘
                     │
        ┌─────────────────────────┐
        │     Go to step SA6      │
        └─────────────────────────┘
```

Europäisches
Patentamt

European
Patent Office

Office européen
des brevets

# EUROPEAN SEARCH REPORT

Application Number

EP 15 15 6208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/091717 A1 (GARBOW ZACHARY ADAM [US] ET AL) 17 April 2008 (2008-04-17) * paragraphs [0018] - [0026], [0051]; figures 1,2 * | 1-17 | INV. G11B27/10 |
| X | US 2013/268593 A1 (PAREKH NEEL B [US]) 10 October 2013 (2013-10-10) * paragraphs [0040], [0060] - [0065], [0073], [0084] - [0088]; figure 1 * | 1-17 | |
| X | WO 2007/092053 A1 (MUSICSTRANDS INC [US]; MARTIN FRANCISCO J [US]; SHUR JIM [US]; TORRENS) 16 August 2007 (2007-08-16) * paragraphs [0006] - [0029] * | 1-17 | |

TECHNICAL FIELDS
SEARCHED (IPC)

G11B
G06F
H04L

The present search report has been drawn up for all claims

| Place of search | Date of completion of the search | Examiner |
|---|---|---|
| The Hague | 14 July 2015 | Mourik, Piet |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 15 6208

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2015

| Patent document cited in search report | | Publication date | Patent family member(s) | | Publication date |
|---|---|---|---|---|---|
| US 2008091717 | A1 | 17-04-2008 | NONE | | |
| US 2013268593 | A1 | 10-10-2013 | CN | 104704465 A | 10-06-2015 |
| | | | EP | 2836905 A2 | 18-02-2015 |
| | | | US | 2013268593 A1 | 10-10-2013 |
| | | | WO | 2013155221 A2 | 17-10-2013 |
| WO 2007092053 | A1 | 16-08-2007 | BR | PI0621315 A2 | 06-12-2011 |
| | | | EP | 1987451 A1 | 05-11-2008 |
| | | | JP | 5161794 B2 | 13-03-2013 |
| | | | JP | 2009526310 A | 16-07-2009 |
| | | | KR | 20080100342 A | 17-11-2008 |
| | | | US | 2009222392 A1 | 03-09-2009 |
| | | | US | 2014237361 A1 | 21-08-2014 |
| | | | WO | 2007092053 A1 | 16-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014035205 A
- JP 2008268308 A